# EUROPEAN PATENT SPECIFICATION

(11) **EP 2 280 211 B1**
(45) Date of publication and mention of the grant of the patent: **27.06.2012**
(21) Application number: 09251892.7
(22) Date of filing: 28.07.2009
(51) Int. Cl.: F16L 55/44

(54) **Multi-diameter elastic sealing module for pigs**
Elastisches Dichtungsmodul für Leitungsmolch für Leitungen unterschiedlichen Durchmessers
Module d'étanchéité d'un racleur pour conduites de diamètres diffèrents

(43) Date of publication of application: 02.02.2011
(73) Proprietor: Petróleo Brasileiro S.A. Petrobras, Rio de Janeiro, RJ (BR)
(72) Inventor: Lino, Antônio Carlos Ferreira, Rio de Janeiro, RJ, CEP: 21941-240 (BR); Da Silva, Carlos Alberto Dias, Rio de Janeiro, RJ, CEP: 21.235-320 (BR); Capllonch, Ricardo Wagner, Teresópolis, RJ, CEP: 25964-050 (BR)
(74) Representative: Roberts, Mark Peter

(56) References cited:
- JP-A- 8 170 787
- US-A- 1 035 994
- US-A- 2 099 723
- US-A- 2 188 959
- US-A- 5 904 354
- US-A1- 2005 072 579
- US-A1- 2005 161 232
- US-B1- 6 381 797

## Description

The present invention relates to equipment for sending through the inside of a pipe, for example a pipe of variable diameter. The equipment may be impelled by a fluid which flows in the said pipe.

Many major industries use pipes for transporting various types of fluids therein.

The use of equipment capable of moving through the inside of a pipe by means of, for example, a flow of fluid is well known. Such equipment is frequently referred to by the term "pipeline pig", which may hereinafter be referred to by the term "pig".

Pigs are items of equipment which, when inserted into a pipeline, may travel along its length. They may be pushed, for example, by the flow of the product, such as fluid, inside the pipeline. They may be classified in two categories: "utility pigs", which perform the function of cleaning, separation of products and removal of water; and "in-line inspection tools", also known as "instrument pigs", "intelligent pigs" or "smart pigs", which supply information on the condition of the line as well as on the extent and location of a particular problem.

Pigs may be used during the construction of a pipeline and during the operational life of the pipelines.

A phenomenon that occurs frequently, depending on the characteristics of the fluid present and the flow conditions inside the pipe, and which can generate operational problems or even some degree of risk, is the formation of deposits on the internal wall of the pipe. In some cases, the rate of formation of deposits on the pipe's internal wall is very slow and the deposits are not very hard and do not adhere strongly. In this case, these types of deposit can be removed very easily, even after they first occur. However, in other cases, the formation may prove to be serious incrustations, any may even cause total obstruction of the flow of fluid in some cases. In both of the cases referred to above, a pig may be used as an element for scraping the material deposited inside the pipeline, thereby cleaning the pipeline.

The pigs referred to above have been used for a long time and are more efficient when the pipe diameter is constant.

However, there are some drawbacks which a conventional pig may have. For example, the pig's metal body may break inside the pipe, at pipe joints or even in valves.

An example of another possible drawback involves the conventional pig's capability to go through pipe bends with a radius below a certain value. Depending on the radius, these bends in the pipe may lead to jamming of the pig, which may cause significant problems.

Pigs constructed with non-rigid elements, though, may not have the same drawbacks as mentioned above. In the event of a structural defect in the pig, as the construction material is normally elastomeric, a second pig may be sent to move pieces of elastomer which may have come away inside the pipe and which the flow of fluid has not been able to move.

However, fluid transport lines have been used recently in which the pipes forming the transport line are of various different nominal diameters. In these cases, the types of pig presently used are unsuitable.

Conventionally, a pig may be of a construction with a diameter which is suitable for a particular inside diameter of pipe, but which may give rise to the jamming of the pig in another length of pipe with a smaller inside diameter. Similarly, the pig may lose thrust if the inside diameter of the pipe increases, thereby allowing fluid to pass in the annular space between the pig and the pipe.

A typical example of one of the situations mentioned above would be an elastomeric pig with cleaning (or scraping) cups which do not have very great flexibility. While the pipe diameter is reduced to a value at which the flexibility of the scraping cups can deform, there will be no problems. However, if the diameter of the pipe decreases further to the extent that the flexibility of the scraping cups is such that there cannot be sufficient deformation of the said cups, the pig may become jammed.

Several developments of pigs capable of carrying out cleaning in pipes of heterogeneous diameter have been suggested.

However, most of the innovations focus on cups adapted to (for example attached to) the pig. Previously, the developments generally related to the physical characteristics of the material with which the cups were made, and in new configurations capable of withstanding the changes in diameter. These pigs are known as "multi-size pigs".

A disadvantageous and very common phenomenon in "multi-size" pigs is the "nose down" misalignment of the pigs with respect to the pipe centre-line, that may result from the excessive flexibility of the seals that may be required.

Another type of pig existing in the prior art is the known "foam pig", which is so called due to being made from a foamed polymeric material such as polyurethane foam, for example. In comparison with the types of pig described above, a pig made of foam has the features of reasonable mechanical strength and good deformation capability. Conventional "foam pigs" have a body shape with a concave recess in one of their ends to act as an area for concentrating the pressure exerted by the impelling fluid, and with a certain amount of convexity at the other end.

A feature of this type of pig is the great deformation capability which it can have. This great deformation, however, involves: (i) low efficiency of removal of hard deposits when in a length of larger-diameter pipe; and/or (ii) causing tears in the body when in a length of smaller diameter. This is due to the lower strength of the material from which it is made, which may, in some cases, lead to the destruction of the pig.

Such pigs have the advantage of being made from low cost material. However, these deformation problems may not be acceptable in cases where the deposits are hard and/or difficult to remove.

Thus, more efficient cleaning of the insides of pipes than that offered by using "foam pigs" is required.

In an attempt to increase abrasion in the pig/pipe internal wall contact, proposals, including modification of the surface texture of the pig body, have been made. Such modifications include creating external radial grafts on to the pig body, with bristles or rough surfaces in various configurations such as diamond shapes, as exemplified in documents US 3602934, of the Acushnet Company and US 4242771, of Kenneth M. Knapp. The superimposition of different materials has also been considered, as in document US 5895619, of Kenneth M. Knapp. The covering of the whole of the pig body with an outer layer provided with miniscule metal or non-metal bristles, has also been considered in US 4016620, of Pipeline Dehydrators Inc.

Document US 6500271 B1, of Darren Moore, describes a pig that has a cylindrical central portion with an empty core, with the two ends rounded and with pressure relief valves at the ends. The pig is produced in a flexible material and has a plurality of circumferential protuberances on the external surface with metal scrapers along the protuberances. The inside of the empty core is filled with a solution which is expelled through the pressure relief valves when the pressure inside the pig increases significantly.

Despite an improvement in cleaning efficiency, the abrasiveness of the above-mentioned outside surfaces can go so far as to cause severe scratches on the internal wall of the pipe, notably in the case of flexible lines which have a thin internal layer made of stainless steel.

Proposals have also been made that relate to increasing the scraping capability by providing bristles or modifying the surface texture only on some narrow strips arranged helically along the length of the pig, on the outside of the pig's cylindrical body, so as to cover the whole inside diameter of the pipe.

Documents US 4720884, of T.D. Williamson Inc., US 5384929 present a support for the cleaning elements, in this case brushes, fitted on platforms made of elastic material. Document US 6538431, of PII Limited, shows a pig for pipe inspection with inspection elements fitted on platforms which withdraw or expand, following the inside diameter of the pipe, in response to the deformation to which the impelling cups are subjected.

However, these concepts suffer from at least the problem of being limited to one-way travel inside the pipe.

It is desirable for a pig to be developed which is capable of; for example, travelling inside a pipe bi-directionally and/or with scraping elements which are capable of providing scraping efficiency in pipelines which have different diameters.

In US 6145150, of Kenneth M. Knapp, a pig is formed by two interconnected components, one of them in the form of a disc adapted in a cylindrical core. This pig may pass through a pipe with some changes in diameter. The pig in question is made of foam.

Document PI 0304793-8, of Petróleo Brasileiro S.A., presents a proposal for a multi-directional articulated scraping pig formed by 4 modules joined by a tensioning element, in which the two end modules are impelling modules and the two central modules are scraping modules, intended for removing incrustations on the walls of pipes. However, the impelling modules have rigid cores. Thus, there can be no longitudinal elongation when there is a change in diameter, as this would cause the destruction of the foam body of the impelling module. None of the prior art pigs allow for:
- travelling inside pipes which have quite different diameters, including intermediate diameters,
- passing through "Y"-shaped connections,
- requiring only a small pressure differential for movement,
- being capable of withstanding a change in direction without jamming, for example due to becoming wedged,
- passing through pipe bends,
- having sufficiently high contact between the cleaning element and the internal wall of the pipe, and
- not damaging the inside of the pipe.

US 2005/0072579 discloses an elastic sealing module suitable for a pig according to the pre-characterising section of claim 1 appended hereto.

It is desirable to provide a pig and/or an impelling module therefore which has at least one, and preferably some or all of the above features. It is also desirable to provide a pig or an impelling module for a pig in which there can be longitudinal elongation (and associated diameter, or perimeter, change), without the impelling module's or pig's foam body being destroyed. It is desirable to retain the advantageous properties of the impelling module of BR PI 0304793-8.

The aforementioned problems are solved, according to the invention by means of an elastic sealing module for a pig having the features of claim 1.

This invention relates to an item of equipment intended for being sent through the inside of a flexible or rigid pipe. The equipment may optionally be configured to move various fittings. The equipment may additionally or alternatively remove internal incrustations from the pipe, and/or may be impelled by a fluid which flows inside the above-mentioned pipe.

An embodiment of the equipment may be referred to as a multi-diameter elastic sealing module for pigs (or elastic sealing module for a pig). It may have an "elastic outer element" (which may have a body of any suitable shape, for example and most usually according to the shape of the pipe through which it is to travel, such as cylindrical), which may be made of polyurethane foam, with or without surface channels. The elastic outer element may have two tapered distal ends that may each be in the form of a truncated cone. This may give the elastic sealing element and/or the multi-diameter elastic sealing module for pigs a symmetrical appearance. This symmetry eases bi-directional movement of the sealing module inside a pipe. However, some embodiments may not have tapered distal ends and/or may not be symmetrical.

Each end of the sealing module may have an element for clamping towing modules or towed modules. These elements for clamping may be joined to the elastic sealing module by means of fastening elements.

Inside the elastic sealing module body (or elastic outer element), a flexible core (which may be referred to as a flexible core element) is inserted. The flexible core element may have a hollow body. The hollow body may be cylindrical. The ends of the flexible core element may be in a form such that coupling operations can be carried out and in which the elements for clamping may be coupled.

The flexible core may have one or more strips and/or one or more slots. The strips/slots may be equally spaced in the surface of the flexible core element. The slots may start close to a first end and terminate close to a second end of the flexible core element. The slots in the hollow body may thus result in elastic strips being formed in the flexible core. The length direction of the strips/slots may have a vector component that is parallel to a longitudinal axis of the elastic sealing module. In an embodiment, the main vector component of the length direction of the strips/slots may be parallel to the longitudinal axis of the elastic sealing module.

The flexible core is made of an elastomeric material and may be inserted inside the elastic outer element of the sealing module with slight compression. This makes it possible for the elastic sealing module to elongate longitudinally when there is a change in diameter of the pipe. The longitudinal elongation may be associated with a reduction in the length of the perimeter of the elastic sealing module and/or of the elastic outer element (for example a reduction in diameter in the case that the elastic outer element is substantially cylindrical). It will be understood that a reduction in the length of the perimeter may also be referred to as a reduction in the area of the cross section taken through the elastic outer element in a plane that is perpendicular to a longitudinal axis of the elastic sealing module and/or elastic outer element.

The elastic sealing module of this invention may comprise features seen immediately above and detailed below. The sealing module may thus be considered to be multi-diameter.

According to aspect the invention, there is provided an elastic sealing module for a pig, according to claim 1 appended hereto.

According to an embodiment the flexible core element comprises a hollow body with at least one slot and/or at least one strip.

According to an embodiment the flexible core element comprises at least two slots that form at least two strips.

According to an embodiment each slot and/or strip extends in a direction having a vector component that is aligned with the longitudinal axis of the elastic sealing module.

According to an embodiment each end of said flexible core element is accessible when the elastic sealing module is assembled and is configured so as to be able to form part of a coupling.

According to an embodiment an elastic sealing module for a pig may further comprise:
a first clamping element coupled to a first end of the flexible core element; and
a second clamping element coupled to a second end of the flexible core element.

According to an embodiment the first clamping element may comprise:
a first coupling segment, coupled to the first end of the flexible core; and
a first clamping segment configured to be coupled to a towed and/or towing device, and/or
the second clamping element may comprise:
a second coupling segment, coupled to the second end of the flexible core; and
a second clamping segment, configured to be coupled to a towed and/or towing device.

According to an embodiment the elastic outer element may comprise a substantially cylindrical portion and a tapered end portion extending from each end of the substantially cylindrical portion, and, optionally, the tapered end portions may be substantially frustro-conical.

According to an embodiment the or a first end of the flexible core element and the or a second end of the flexible core element extend from respective ends of the elastic outer element along the longitudinal axis of the elastic sealing module.

According to an embodiment the elastic outer element comprises a plurality of longitudinal surface channels which are distributed around the perimeter, and which are, optionally, equidistant.

According to an embodiment the elastic outer element may comprise polyurethane foam; and/or
the elastomeric flexible core element may comprise an elastomeric polyurethane.

According to an aspect of the invention, there is provided a pig comprising any one of the elastic sealing modules described and/or claimed herein.

According to an aspect of the invention, there is provided a method of cleaning a variable diameter pipe using a pig described herein, said method comprising propelling said pig along said variable diameter pipe.

According to an aspect of the invention, there is provided a method of cleaning a variable diameter pipe comprising:
propelling a pig along the pipe; and
in response to a change in perimeter of the variable diameter pipe, elastically moving a flexible core element provided inside an elastic element of at least a part of the pig so as to elastically vary the perimeter of the pig to conform to the pipe perimeter.

According to an embodiment of the invention, there is provided a multi-diameter elastic sealing module for pigs, intended for being sent through the inside of a flexible or rigid pipe, in order, for example, to move various fittings, the sealing module being configured to remove internal incrustations from the pipe and being impelled by a fluid which flows inside the above-mentioned pipe, wherein the sealing module is capable of being used as a complete pig or as a sealing/propelling module for a multi-stage pig, which moves fittings coupled to it and in addition may comprise:
- a substantially cylindrical sealing/impelling element (which may be referred to as an elastic outer element), with each of the ends terminating in the form of a truncated cone,
- a flexible core element, which may be a hollow cylindrical body, covered by the sealing/impelling element, with ends in a form such that coupling operations can be carried out, has a plurality of longitudinal slots, equally spaced in the cylindrical surface, which start close to a first end of the flexible core and terminate close to a second end of the flexible core and form elastic strips integrated in the flexible core,

- a first, cylindrical, clamping element, with at least two segments with cross sections of different diameters, coupled to the first end of the flexible core,
- a second, cylindrical, clamping element, with at least two segments with cross sections of different diameters, coupled to the second end of the flexible core,
- a first fastening element joined to the first clamping element and configured to assist the fastening of the first clamping element to the first end of the flexible core; and
- a second fastening element joined to the second clamping element and configured to assist the fastening of the second clamping element to the second end of the flexible core.

The elastic outer element may comprise longitudinal surface channels which are equidistant and distributed on the cylindrical surface.

The elastic outer element may be made of polyurethane foam.

The flexible core element may have a convexity in its most central area, with which it is possible for the sealing/impelling element to elongate longitudinally.

The flexible core element may be made of elastomeric polyurethane.

The first end of the flexible core element and the second end of the flexible core element may coincide with the ends of the elastic outer element.

The first end of the flexible core element and the second end of the flexible core element may have configurations such that the first clamping element and the second clamping element, respectively, can be coupled.

The first clamping element may comprise at least:
- a first coupling segment, configured such that it can be coupled to the first end of the flexible core; and/or
- a first clamping segment, configured such that towed or towing devices can be clamped.

The second clamping element may comprise at least:
- a second coupling segment configured such that it can be coupled to the second end of the flexible core; and/or
- a second clamping segment, configured such that towed or towing devices can be clamped.

The first clamping element and the second clamping element may be made of metal.

The first fastening element may be a pin, a nut and washer assembly, or other known fastening means.

The second fastening element may be a pin, a nut and washer assembly, or other known fastening means.

The first fastening element and the second fastening element may be made of metal.

The features of the (multi-diameter) elastic sealing module will be better understood from the detailed description given below, together with the associated drawings referenced below, which are by way of example only but form an integral part of this specification, and in which:
Figure 1 gives a perspective view of a possible embodiment of the multi-diameter elastic sealing module according to this invention;
Figure 2 gives a side view, in cross-section of the embodiment of the multi-diameter elastic sealing module shown in figure 1;
Figure 3 gives a perspective view of the flexible core in the form in which it is inserted in the multi-diameter elastic sealing module;

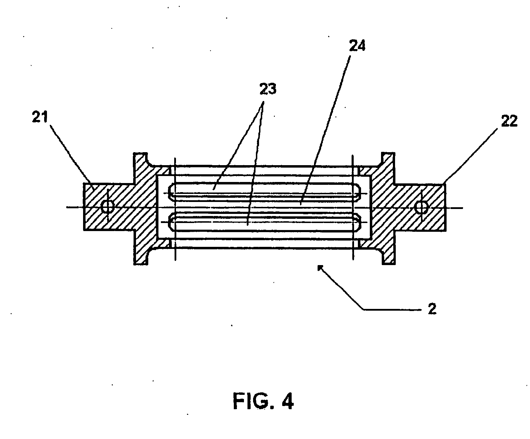

Figure 4 gives a side view of the flexible core before it is inserted in the elastic sealing module;

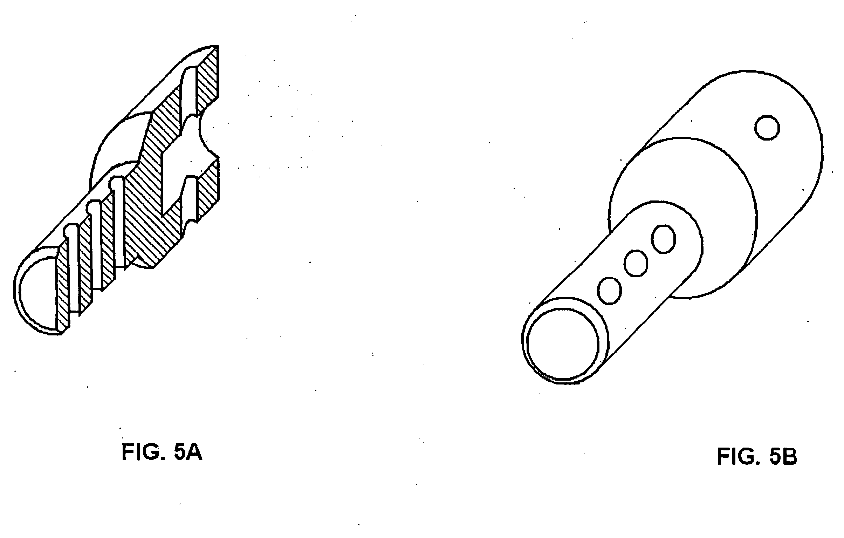

Figure 5A gives a perspective view in section of a possible embodiment of the first clamping element;
Figure 5B gives a perspective view of a possible embodiment of the second clamping element;

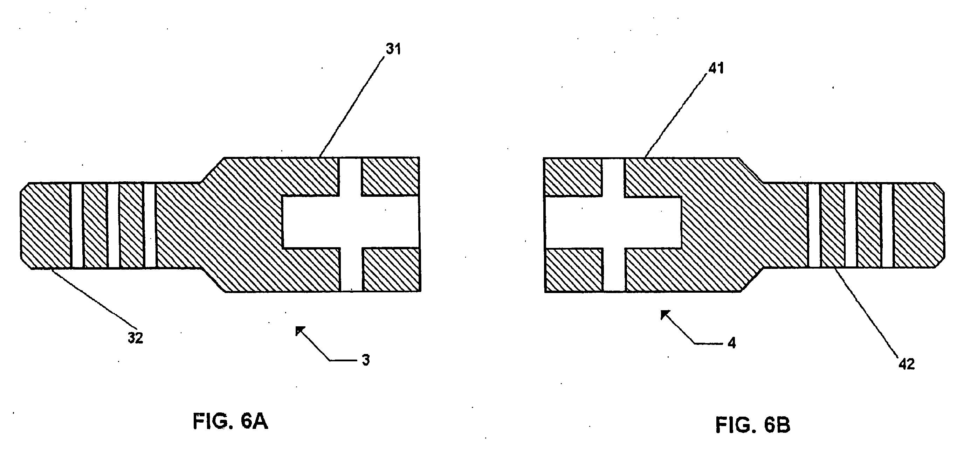

Figure 6A gives a side view in cross-section of the first clamping element of the first embodiment according to figure 5A;
Figure 6B gives a side view in cross-section of the second clamping element of the first embodiment according to figure 5B; and

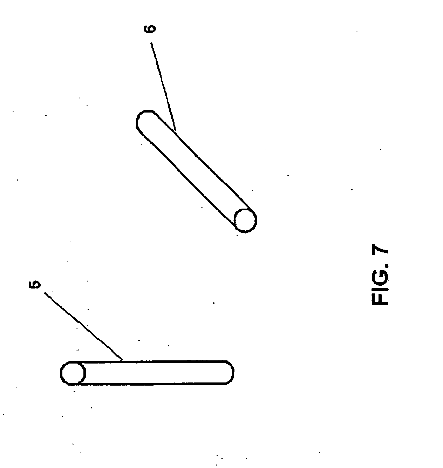

Figure 7 gives a perspective view of an embodiment of the first and second fastening element.

This invention relates to a (multi-diameter) elastic sealing module for pigs, which is intended for being sent through the inside of a flexible or rigid pipe. The elastic sealing module may be configured to move pigs with various fittings, with, for example, an objective of removing internal incrustations on this pipe. The elastic sealing module may be impelled (i.e. moved) by a fluid which flows inside the above-mentioned pipe. The elastic sealing module may be capable of being used as a complete pig, or as a sealing / propelling module for a multi-stage pig, which moves fittings coupled to it.

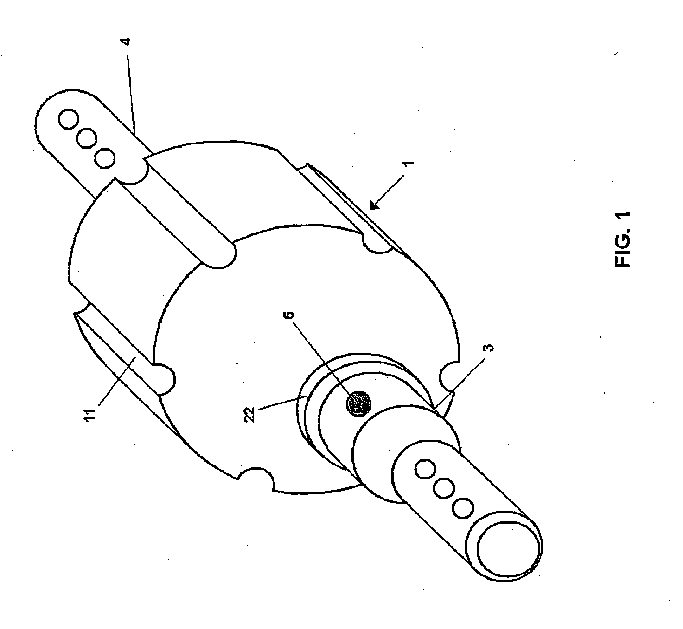

Figure 1 gives a perspective view of a possible embodiment of the elastic sealing module which is the subject of this invention.

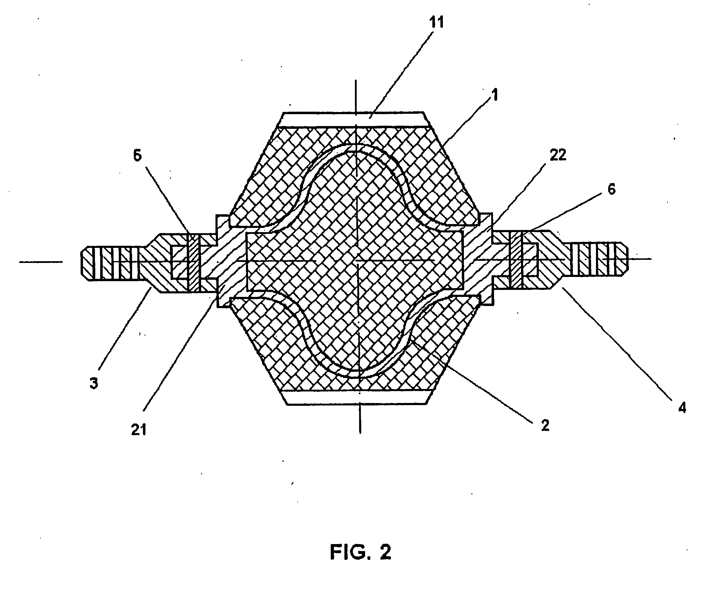

Figure 2 gives a longitudinal section view of an embodiment, shown in figure 1, of the body of the elastic sealing module, which is the subject of this invention, which comprises:
   a substantially cylindrical elastic outer element (also referred to below as a sealing / impelling element) (1) with each of the ends terminating in the form of a truncated cone;
   a flexible core element (2), which may be a hollow body (for example cylindrical), covered by the sealing / impelling element (1), with ends in a form such that coupling operations can be carried out, has longitudinal slots (23), equally spaced in the cylindrical surface, which start close to a first end (21) of the flexible core (2) and terminate close to a second end (22) of the flexible core (2) and form elastic strips (24) integrated in the flexible core (2).

The elastic sealing module may also comprise:
a first, cylindrical, clamping element (3), which may have at least two segments with cross sections of different diameters, coupled to the first end (21) of the flexible core (2); and
a second, cylindrical, clamping element (4), which may have at least two segments with cross sections of different diameters, coupled to the second end (22) of the flexible core (2).

The first clamping element (3) may be coupled to the first end (21) of the flexible core (2) by a first fastening element (5).

The second clamping element (4) may be coupled to the second end (22) of the flexible core (2) by a second fastening element (6).

It will be noted that, although in this embodiment, the main body of the elastic outer element (1) is substantially cylindrical, any suitable shape could be used. For example, the shape of the elastic outer element (1) may be chosen to be the same as the pipe inside which the elastic sealing module and/or pig is to travel. As such, it could, for example, have a circular, triangular, square, pentagonal, hexagonal or octagonal cross-section.

The sealing/impelling element (1) may be impelled by the pumped fluid in the pipe and may move the elastic sealing module through the inside of the pipe. The sealing/impelling element (1) maintains contact with the pipe walls alongside the area of the cylindrical surface, which reduces the risk of longitudinal misalignment of the elastic sealing module with respect to the pipe. The two ends of the sealing/impelling element (1) may be the same shape. They may be tapered, for example in the form of a truncated cone. The ends may be frustro-conical. This may make it easier for the elastic sealing module to travel along the inside of the pipe bi-directionally.

The sealing/impelling element (1) may comprise longitudinal surface channels (11) which may be equidistant and distributed on the cylindrical surface. The channels (11) may be provided to allow the passage of a small amount of fluid past the sealing/impelling element (1), e.g. from its rear to its front. The sealing/impelling element (1) is preferably made of polyurethane foam. Any suitable number of channels (11) may be provided, for example 1, 2, 3, 4, 5, 6, 7, 8, 9, 10 or more than 10 channels.

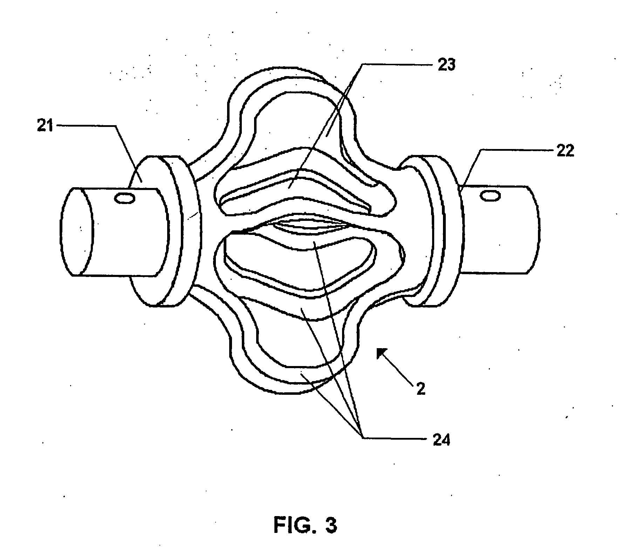

Figure 3 gives a perspective view of a possible embodiment of the flexible core element (2) in the position in which it is inserted in the sealing/impelling element (1). In an embodiment, the flexible core element (2), when inserted in the sealing/impelling element (1), has a convex portion at its central area. It is at least partially compressed in such an embodiment. An embodiment of the flexible core element (2), as shown in Figure 3, may have bowed elastic strips (24) when assembled with the sealing/impelling element (1). The convex portion of the flexible core element (2), and/or the bowed elastic strips (24) may be configured to be elastically straightenable. This means that it is possible for the sealing/impelling element (1) to elongate (together with the flexible core (2)) when there is a change (for example decrease) in diameter of the pipe. For example, the pipe diameter may change from a larger diameter, such as 6", to a smaller diameter, such as 4". There may be a corresponding change in the outer diameter of the sealing/impelling element (1).

The flexible core (2), which is made of an elastomeric material, is preferably made of elastomeric polyurethane.

The first end (21) of the flexible core (2) and the second end (22) of the flexible core (2) may coincide with the ends of the sealing/impelling element (1). They may have configurations such that the clamping elements (3) and (4) can be coupled.

The first clamping element (3) and the second clamping element (4) assist the connection of the elastic sealing module to towed devices and/or to towing devices, which can accompany (e.g. be attached to) the elastic sealing module during operation. Through the clamping elements (3) and (4), the elastic sealing module is capable of towing devices. These devices may be, for example, devices for scraping off incrustations on the pipe walls, and/or devices for checking for structural defects in the pipe and/or such other devices as are necessary or alternatively capable of being towed when it is an integral part of a multi-stage pig.

Figure (5A) and figure (6A) show an embodiment of the first clamping element (3), which comprises at least two segments with different diameters comprising:
a first coupling segment (31), configured such that it can be coupled to the first end (21) of the flexible core (2); and
a first clamping segment (32), configured such that towed or towing devices can be clamped, the configuration being, for example, one or more radial holes and/or one or more external screw threads.

Figure (5B) and figure (6B) show an embodiment of the second clamping element (4), which comprises at least two segments with different diameters, comprising:
a second coupling segment (41), configured such that it can be coupled to the second end (22) of the flexible core (2); and
a second clamping segment (42), configured such that towed or towing devices can be clamped, the configuration being, for example, one or more radial holes and/or one or more external screw threads.

The first clamping element (3) and the second clamping element (4) are preferably made of metal, although any suitable material may be used.

The first fastening element (5) and the second fastening element (6) can be pins and/or nut and washer assemblies and/or any other suitable fastening means, such as those known from the prior art which are capable of keeping the clamping elements (3) and (4) joined to the flexible core (2).

The first fastening element (5) and the second fastening element (6) are preferably made of metal.

The elastic sealing module and/or pig described above may be capable of:
(i) operating in pipes formed by lengths of pipes, which may be flexible and be of variable diameters; and/or
(ii) moving in both directions of a pipe; and/or
(iii) exhibiting longitudinal elongation to facilitate better adaptation to the variations in pipe diameter; and/or
(iv) passing through asymmetrical and converging "piggable" "Y" connections which may be, for example, of at least 30°.

According to an embodiment of the invention, there is provided a method of cleaning a variable diameter pipe. According to the method, a pig and/or a sealing module for a pig is propelled along a pipe, for example using or under the action of the fluid in the pipe. The pig and/or sealing module used in the cleaning may be in accordance with those described herein. As the pig and/or sealing module moves through the pipe, the cross-section of the pipe may change. The outer surface of the pig and/or sealing module may change with the changing cross-section (for example changing diameter) of the pipe. The change in the outer surface of the pig and/or sealing module may be associated with elastic movement of a flexible core element (2), which may be provided inside an elastic outer element (1). A change in the length of the pig and/or sealing module may be coupled to the change in outer surface shape.

The description of the elastic sealing module and/or pig given herein, which is the subject of this invention, is by way of a possible example only. Thus any particular feature should be understood as being to assist understanding only. Furthermore, any feature described herein may be provided in an elastic sealing module and/or pig according to the present invention in combination with any other compatible feature. It will be understood that the invention is not to be limited to the above-described examples and embodiments, but only by the attached claims.

## Claims

1. An elastic sealing module for a pig, the pig being arranged to be moved along a pipe, said elastic sealing module having a longitudinal axis and comprising:
an elastic outer element (1); and
a flexible core element (2) provided inside the elastic outer element, wherein,
the elastic outer element (1) and the flexible core element (2) cooperate so as to allow an elastic change from a larger diameter to a smaller diameter of said elastic outer element (1), and so that the flexible core element is longitudinally compressed when the elastic outer element has said larger diameter,
**characterised in that**:
the flexible core element is made of an elastomeric material.

2. An elastic sealing module according to claim 1, wherein the flexible core element (2) comprises a hollow body with at least one slot (23) and/or at least one strip (24).

3. An elastic sealing module according to claim 2, wherein the flexible core element (2) comprises at least two slots (23) that form at least two strips (24).

4. An elastic sealing module according to claim 2 or claim 3, wherein each slot (23) and/or strip (24) extends in a direction having a vector component that is aligned with the longitudinal axis of the elastic sealing module.

5. An elastic sealing module for a pig according to any one of the preceding claims, wherein each end (21, 22) of said flexible core element (2) is accessible when the elastic sealing module is assembled and is configured so as to be able to form part of a coupling.

6. An elastic sealing module for a pig according to any one of the preceding claims, further comprising:
a first clamping element (3) coupled to a first end (21) of the flexible core element (2); and
a second clamping element (4) coupled to a second end (22) of the flexible core element (2).

7. An elastic sealing module for a pig according to claim 6, wherein the first clamping element (3) comprises:
a first coupling segment (31), coupled to the first end (21) of the flexible core (2); and
a first clamping segment (32) configured to be coupled to a towed and/or towing device, and/or
wherein the second clamping element (4) comprises:
a second coupling segment (41), coupled to the second end (22) of the flexible core (2); and
a second clamping segment (2), configured to be coupled to a towed and/or towing device.

8. An elastic sealing module for a pig according to any one of the preceding claims, wherein the elastic outer element (1) comprises a substantially cylindrical portion and a tapered end portion extending from each end of the substantially cylindrical portion, and, optionally, wherein the tapered end portions are substantially frustro-conical.

9. An elastic sealing module for a pig, according to any one of the preceding claims, wherein the or a first end (21) of the flexible core element (2), and the or a second end (22) of the flexible core element (2) extend from respective ends of the elastic outer element (1) along the longitudinal axis of the elastic sealing module.

10. An elastic sealing module, according to any one of the preceding claims, wherein the elastic outer element (1) comprises a plurality of longitudinal surface channels (11) which are distributed around the perimeter, and which are, optionally, equidistant.

11. An elastic sealing module, according to any one of the preceding claims, wherein:
the elastic outer element (1) comprises polyurethane foam; and/or
the flexible core element (2) comprises an elastomeric polyurethane.

12. An elastic sealing module, according to any one of the preceding claims, wherein the elastic outer element further extends within the flexible core element.

13. A pig comprising the elastic sealing module of any one of claims 1 to 12.

14. A method of cleaning a variable diameter pipe using a pig according to claim 13, said method comprising propelling said pig along said variable diameter pipe.

## Patentansprüche

1. Elastisches Dichtmodul für einen Molch, wobei der Molch eingerichtet ist, um entlang eines Rohrs bewegt zu werden, wobei das elastische Dichtmodul eine Längsachse hat und umfasst:
ein elastisches äußeres Element (1); und
ein flexibles Kernelement (2), welches innerhalb des elastischen äußeren Elements bereitgestellt ist, wobei
das elastische äußere Element (1) und das flexible Kernelement (2) so zusammenwirken, dass sie eine elastische Änderung von einem größeren Durchmesser zu einem kleineren Durchmesser des elastischen äußeren Elements (1) erlauben, und so dass das flexible Kernelement in Längsrichtung komprimiert ist, wenn das elastische äußere Element den größeren Durchmesser hat,
**dadurch gekennzeichnet, dass**:
das flexible Kernelement aus einem elastomeren Material gemacht ist.

2. Elastisches Dichtmodul nach Anspruch 1, wobei das flexible Kernelement (2) einen hohlen Körper mit mindestens einem Schlitz (23) und/oder mindestens einem Streifen (24) umfasst.

3. Elastisches Dichtmodul nach Anspruch 2, wobei das flexible Kernelement (2) mindestens zwei Schlitze (23) umfasst, die mindestens zwei Streifen (24) ausbilden.

4. Elastisches Dichtmodul nach Anspruch 2 oder Anspruch 3, wobei jeder Schlitz (23) und/oder Streifen (24) sich in einer Richtung erstreckt, die eine Vektorkomponente hat, die mit der Längsachse des elastischen Dichtmoduls ausgerichtet ist.

5. Elastisches Dichtmodul für einen Molch nach einem der voranstehenden Ansprüche, wobei jedes Ende (21, 22) des flexiblen Kernelements (2) zugänglich ist, wenn das elastische Dichtmodul zusammengebaut ist und konfiguriert ist, sodass es einen Teil einer Kopplung ausbilden kann.

6. Elastisches Dichtmodul für einen Molch nach einem der voranstehenden Ansprüche weiterhin umfassend:
ein erstes Klemmelement (3), welches mit einem ersten Ende (21) des flexiblen Kernelements (2) gekoppelt ist; und
ein zweites Klemmelement (4), welches mit einem zweiten Ende (22) des flexiblen Kernelements (2) gekoppelt ist.

7. Elastisches Dichtmodul für einen Molch nach Anspruch 6, wobei das erste Klemmelement (3) umfasst:
ein erstes Kopplungssegment (31), welches an das erste Ende (21) des flexiblen Kerns (2) gekoppelt ist; und
ein erstes Klemmsegment (32), welches konfiguriert ist, an einen Schlepper und/oder eine Schleppvorrichtung gekoppelt zu sein, und/oder
wobei das zweite Klemmelement (4) umfasst:
ein zweites Kopplungssegment (41), welches an das zweite Ende (22) des flexiblen Kerns (2) gekoppelt ist; und
ein zweites Klemmsegment (2), welches konfiguriert ist, an einen Schlepper und/oder eine Schleppvorrichtung gekoppelt zu sein.

8. Elastisches Dichtmodul für einen Molch nach einem der voranstehenden Ansprüche, wobei das elastische äußere Element (1) einen im Wesentlichen zylindrischen Abschnitt und einen sich verjüngenden Endabschnitt, der sich von jedem Ende des im Wesentlichen zylindrischen Abschnitts erstreckt, umfasst, und wobei die sich verjüngenden Endabschnitte optional im Wesentlichen frustrokonisch sind.

9. Elastisches Dichtmodul für einen Molch nach einem der voranstehenden Ansprüche, wobei sich das oder ein erstes Ende (21) des flexiblen Kernelements (2) und das oder eine zweites Ende (22) des flexiblen Kernelements (2) von den entsprechenden Enden des elastischen äußeren Elements (1) entlang der Längsachse des elastischen Dichtmoduls erstrecken.

10. Elastisches Dichtmodul nach einem der voranstehenden Ansprüche, wobei das elastische äußere Element (1) eine Vielzahl von Oberflächenkanälen (11) in Längsrichtung umfasst, die um den Umfang verteilt sind, und die optional equidistant sind.

11. Elastisches Dichtmodul nach einem der voranstehenden Ansprüche, wobei:
das elastische äußere Element (1) einen Polyurethanschaum umfasst; und/oder
das flexible Kernelement (2) ein elastomeres Polyurethan umfasst.

12. Elastisches Dichtmodul nach einem der voranstehenden Ansprüche, wobei das elastische äußere Element sich weiterhin innerhalb des flexiblen Kernelements erstreckt.

13. Molch, welcher das elastische Dichtmodul nach einem der Ansprüche 1 bis 12 umfasst.

14. Verfahren zum Reinigen eines Rohrs mit variablem Durchmesser unter Verwendung eines Molchs nach Anspruch 13, wobei das Verfahren das Antreiben des Molchs entlang des Rohr mit variablem Durchmesser umfasst.

## Revendications

1. Module d'étanchéité élastique pour racleur, le racleur étant adapté pour être déplacé le long d'une conduite, ledit module d'étanchéité élastique ayant un axe longitudinal et comprenant :
un élément extérieur élastique (1) ; et
un élément de coeur flexible (2) placé à l'intérieur de l'élément extérieur élastique,
dans lequel l'élément extérieur élastique (1) et l'élément de coeur flexible (2) coopèrent afin de permettre un changement élastique d'un grand diamètre à un petit diamètre dudit élément extérieur élastique (1), et de sorte que l'élément de coeur flexible est comprimé longitudinalement quand l'élément extérieur élastique a ledit grand diamètre,
**caractérisé en ce que** l'élément de coeur flexible est fait d'un matériau élastomère.

2. Module d'étanchéité élastique selon la revendication 1, dans lequel l'élément de coeur flexible (2) comprend un corps creux comportant au moins une fente (23) et/ou au moins une bande (24).

3. Module d'étanchéité élastique selon la revendication 2, dans lequel l'élément de coeur flexible (2) comprend au moins deux fentes (23) qui forment au moins deux bandes (24).

4. Module d'étanchéité élastique selon la revendication 2 ou 3, dans lequel chaque fente (23) et/ou bande (24) s'étend dans une direction ayant une composante de vecteur qui est alignée avec l'axe longitudinal du module d'étanchéité élastique.

5. Module d'étanchéité élastique pour racleur selon l'une quelconque des revendications précédentes, dans lequel chaque extrémité (21, 22) dudit élément de coeur flexible (2) est accessible quand le module d'étanchéité élastique est assemblé et est configurée de façon à pouvoir former une partie d'un accouplement.

6. Module d'étanchéité élastique pour racleur selon l'une quelconque des revendications précédentes, comprenant en outre :
un premier élément de serrage (3) accouplé à une première extrémité (21) de l'élément de coeur flexible (2) ; et
un deuxième élément de serrage (4) accouplé à une deuxième extrémité (22) de l'élément de coeur flexible (2).

7. Module d'étanchéité élastique pour racleur selon la revendication 6, dans lequel le premier élément de serrage (3) comprend :
un premier segment d'accouplement (31), accouplé à la première extrémité (21) du coeur flexible (2) ; et
un premier segment de serrage (32) configuré pour être accouplé à un dispositif remorqué et/ou un dispositif de remorquage, et/ou
dans lequel le deuxième élément de serrage (4) comprend :
un deuxième segment d'accouplement (41), accouplé à la deuxième extrémité (22) du coeur flexible (2) ; et
un deuxième segment de serrage (2) configuré pour être accouplé à un dispositif remorqué et/ou un dispositif de remorquage.

8. Module d'étanchéité élastique pour racleur selon l'une quelconque des revendications précédentes, dans lequel l'élément extérieur élastique (1) comprend une partie sensiblement cylindrique et une partie d'extrémité conique s'étendant depuis chaque extrémité de la partie sensiblement cylindrique, et, en option, dans lequel les parties d'extrémité coniques sont substantiellement tronconiques.

9. Module d'étanchéité élastique pour racleur selon l'une quelconque des revendications précédentes, dans lequel la ou une première extrémité (21) de l'élément de coeur flexible (2), et la ou une deuxième extrémité (22) de l'élément de coeur flexible (2) s'étendent depuis des extrémités respectives de l'élément extérieur élastique (1) le long de l'axe longitudinal du module d'étanchéité élastique.

10. Module d'étanchéité élastique selon l'une quelconque des revendications précédentes, dans lequel l'élément extérieur élastique (1) comprend une pluralité de canaux de surface longitudinaux (11) qui sont répartis autour du périmètre, et qui sont éventuellement équidistants.

11. Module d'étanchéité élastique selon l'une quelconque des revendications précédentes, dans lequel :
l'élément extérieur élastique (1) comprend une mousse de polyuréthane ; et/ou
l'élément de coeur flexible (2) comprend un polyuréthane élastomère.

12. Module d'étanchéité élastique selon l'une quelconque des revendications précédentes, dans lequel l'élément extérieur élastique s'étend en outre à l'intérieur de l'élément de coeur flexible.

13. Racleur comprenant le module d'étanchéité élastique de l'une quelconque des revendications 1 à 12.

14. Procédé de nettoyage d'une conduite à diamètre variable en utilisant un racleur selon la revendication 13, ledit procédé comprenant le fait de propulser ledit racleur le long de ladite conduite à diamètre variable.
